# EUROPÄISCHE PATENTSCHRIFT

(11) **EP 0 946 112 B1**
(45) Veröffentlichungstag und Bekanntmachung des Hinweises auf die Patenterteilung: **02.01.2002**
(21) Anmeldenummer: 97952898.1
(22) Anmeldetag: 08.12.1997
(51) Int. Cl.: A23L 1/236, A23G 3/00, A23L 1/09, A23L 1/0528

(54) **VERWENDUNG VON OLIGOSACCHARIDEN ZUR VERSTÄRKUNG DER SÜSSKRAFT UND ZUR GESCHMACKSVERBESSERUNG EINER ACESULFAM-K/ASPARTAM-MISCHUNG**
THE USE OF OLIGOSACCHARIDES TO INCREASE THE SWEETNESS AND IMPROVE THE TASTE OF AN ACESULFAME-K/ASPARTAME MIXTURE
UTILISATION D'OLIGOSACCHARIDES POUR RENFORCER LE POUVOIR EDULCORANT ET AMELIORER LE GOUT D'UN MELANGE ACESULFAME-K/ASPARTAME

(30) Priorität: 20.12.1996 DE 19653354; 28.07.1997 DE 19732351
(43) Veröffentlichungstag der Anmeldung: 06.10.1999
(73) Patentinhaber: Nutrinova Nutrition Specialties & Food Ingredients GmbH, 65926 Frankfurt am Main (DE)
(72) Erfinder: JAGER, Martin, 67294 Gauersheim (DE); DÖRR, Margit, 67591 Hohen-Sülzen (DE)
(74) Vertreter: Schweitzer, Klaus, Dr.
(86) Internationale Anmeldenummer: EP9706845
(87) Internationale Veröffentlichungsnummer: WO9827832

(56) Entgegenhaltungen:
- EP-A- 0 646 326
- DE-A- 2 628 294
- DE-A- 19 514 274
- US-A- 5 164 214
- US-A- 5 425 961

## Beschreibung

Die vorliegende Erfindung betrifft die Verwendung von Ofigosacchariden zur Verstärkung der Süßkraft und zur Geschmacksverbesserung einer Acesulfam-KlAspartam-Mischung.

Mischungen von Acesulfam-K und Aspartam mit synergistischer Süßkraftverstärkung sind in der Literatur beschrieben (DE-C 2 628 294).

Die US 5,425,961 beschreibt Kaugummiprodukte, die Fructooligosaccharide als "bulking agents" enthalten. Weiterhin ist die stabilisierende Wirkung dieser Fructooligosaccharide auf Aspartam und z. B. eine Mischung Aspartam/ Acesulfam/ Fructooligosaccharide (Beispiel 105) beschrieben. Angaben zur Süßkraft derartiger Mischungen werden nicht gemacht.

Die EP-A 646 326 beschreibt eine Süßstoffkombination, die ein Oligosaccharid in fester oder pulverisierter Form enthält, das mit einem Süßstoff beschichtet ist. Dieser Erfindung liegt die Aufgabe zugrunde, eine feste Süßstoffmischung mit Oligosacchariden bereitzustellen, bei der kein Verkleben oder Verklumpen der Oligosaccharid-Partikel auftritt. Als weitere Aufgabe wird erwähnt, eine Süßstoffmischung mit verbessertem Fließverhalten und Süßkraft bereitzustellen. Der Synergismus, der aus den Beispielen und Tabellen abzuleiten ist, ist jedoch nur gering.

Die DE-A 195 14 274 beschreibt eine Brausetablette, die Inulin enthält. Inulin soll dabei vor allem als Ballaststoff fungieren, aber auch einen "volleren Geschmack" im Getränk bewirken. Beispiel 2 dieses Dokumentes betrifft eine Brausetablette, die neben Inulin unter anderem auch Acesulfam und Aspartam enthält und die in Wasser aufgelöst ein Erfrischungsgetränk ergibt. Angaben über die Süßkraft von Mischungen von Süßstoffen und Inulin sind dem Dokument nicht zu entnehmen.

Die US-A-5 164 214 beschreibt Süßstoffmischungen mit stark verbesserten Saccharose - ähnlichen Geschmach, die zusammengesekt sind aus einem Synthetischen Süßstoff, Vorzugweise aus einer Mischung vor zwei Süßtoffen, insbesondere einer Mischung aus Aspartam und Acesulfam-K, und einer Konzentrierten Fruchtzubereitung.

Es besteht weiterhin ein großer Bedarf nach Süßstoffmischungen, die einen einer Saccharoselösung möglichst ähnlichen Geschmack und Mundgefühl aufweisen und diesen Effekt mit möglichst geringen Konzentrationen an Süßstoff erreichen.

Überraschenderweise wurde nun gefunden, daß Mischungen aus Acesulfam-K und Aspartam und einem Oligosaccharid eine Süßkraftverstärkung aufweisen, die in ihrem Ausmaß die Erwartungen eines Fachmannes weit übertrifft und dabei dem Geschmack und Mundgefühl von Saccharose äußerst nahe kommt.

Die vorliegende Erfindung betrifft also die Verwendung von Oligosacchariden zur Verstärkung der Süßkraft und zur Geschmacksverbesserung einer Acesulfam-K/Aspartam-Mischung.

Bewährt hat sich ein Gemisch aus Acesulfam-K und Aspartam im Verhältnis von 95 : 5 bis 5 : 95, insbesondere 70 : 30 bis 30 : 70, bevorzugt 50 : 50.

Ofigasaccharide im Sinne vorliegender Erfindung sind insbesondere wasserlösliche, in der Regel, aber nicht zwingend, nicht verdaubare, d.h nicht durch die menschlichen Verdaunugsenzyme hydrolysurbare,Oligosaccharide, die aus mindestens zwei Monosaccharid-Bausteinen bestehen. Nach oben ist die Zahl der Monosaccharid-Bausteine, aus denen ein anspruchsgemäßes Oligosaccharid bestehen kann, weitgehend offen und wird insbesondere durch die normalerweise erforderliche Wasserlöslichkeit bestimmt. In der Regel weisen Oligosaccharide 2 bis 60 Monosaccharid-Bausteine auf.
Monosaccharide, aus denen die anspruchsgemäßen Oligosaccharide bestehen können sind in der Regel Hexosen, die als Furanoside oder Pyranoside vorliegen können. Beispiele für Monosaccharide sind Glucose, Galactose und Fructose. Bevorzugte Oligosaccharide sind insbesondere Inuline, Oligofructosen, Galactooligosaccharide, Isomaltooligosaccharide, Lactosucrose, Maltose, Glycosylsucrose, Maltotetraose und Trehalose.

Die anspruchsgemäßen Oligosaccharide sind bekannt und im Handel erhältlich oder nach dem Fachmann bekannten Verfahren herstellbar. Fructooligosaccharide sind Kohlenhydrate, welche zur Fructangruppe gehören. Es , wird bei Fructooligosacchariden unterschieden zwischen Inulin und Oligofructose. Inulin besteht chemisch gesehen aus Poly- und Oligosacchariden, die fast alle die chemische Struktur GFn (G = Glucose, F = Fructose und n = Anzahl der Fructose-Einheiten, die aneinandergekettet sind) aufweisen. Der Polymerisationsgrad liegt bei 2 bis 60 Molekülen. Die Bindungen zwischen den Molekülen sind von besonderer Art. Sie weisen die β(2→1)-Form auf, was zur Folge hat, daß die Moleküle für alle höher entwickelten Lebewesen unverdaulich sind. Inulin fungiert als Energiereserve in zahlreichen Früchten und Pflanzen. In Europa wird Inulin industriell aus Zichorien hergestellt. Die natürlich vorkommenden Inulinmoleküle werden aus der Wurzel der Zichorie extrahiert, gereinigt und getrocknet. Inulin enthält Oligofructose, welche gewissermaßen eine Fraktion des Inulin mit niedrigem Polymerisationsgrad (etwa von 2 bis 9) ist. Sie wird durch Hydrolyse aus Inulin gewonnen. Inulin und Oligofructose sind in Europa als Lebensmittel-Inhaltsstoffe anerkannt.
Galactooligosaccharide sind ebenfalls Kohlenhydrate, chemisch betrachtet eine Mischung aus Poly- und Oligosacchariden. Der Polymerisationsgrad liegt zwischen 1 und 7 Molekülen. Galactooligosaccharide werden industriell aus Lactose durch enzymatische Hydrolyse hergestellt.
Isomaltooligosaccharide werden durch enzymatische Hydrolyse aus maltosereichen Stärkehydrohsaten hergestellt. Lactosucrose wird mit Hilfe des Enzymes Fructofuranosydase aus Laktose, welche in Milch enthalten ist, und Saccharose aus Rohrzucker hergestellt. Maltose und Trehalose sind beide Disaccharide, die aus zwei Molekülen Glukose bestehen, die sich aber in der Art der Verküpfung der beiden Glucose-Bestandteile voneinander unterscheiden Maltose gleicht hinsichtlich Verdaulichkeit, Brennwert und Kariogenität der Saccharose. Glykosylsucrose wird aus einer Mischung von Saccharose und Stärkehydrolisaten durch das Enzym Transferase hergestellt. Es gleicht im Süßeprofil und im kalorischen Brennwert der Saccharose, ist jedoch deutlich weniger süß. Maltotetraose ist ein Tetrasaccharid aus vier Molekülen Glukose.

Die Oligosaccharide können allein oder auch in Mischungen untereinander nach dem erfindungsgemäßen Verfahren eingesetzt werden.

Die Oligosaccharide können der Süßstoffmischung in unterschiedlichen Konzentrationen zugegeben werden, die sich in erster Linie nach dem jeweiligen Einsatzzweck richtet. Praktisch von Bedeutung ist ein Gewichsverhältnis von 10 : 1 bis 10 000 : 1, insbesondere 500 : 1 bis 5000 : 1 bezogen auf die Süßstoffmischung.

Neben einem oder mehreren Oligosacchariden können der Süßstoffmischung auch geschmacksmodifizierende Substanzen wie z.B. Neohesperidin DC (NHDC), Thaumatin oder Rhamnose zugesetzt werden. Auch hier kann die Zusatzmenge in weiten Grenzen schwanken und richtet sich in erster Linie nach dem Einsatzzweck.

Die Zumischung der Oligosaccharide zu der Süßstoffmischung erfolgt nach an sich bekannten Methoden, beispielsweise durch Mischung der Komponenten in geeigneten Mischern oder Granulierem oder auch in Wirbelbettapparaten. Aber auch gemeinsames Auflösen in Wasser ist möglich.

Wie die nachfolgenden Beispiele und Vergleichsbeispiele zeigen, ist die nach dem erfindungsgemäßen Verfahren erreichbare Süßkraftverstärkung in überraschender Weise deutlich größer als mit den einzelnen Süßstoffen erreichbar. Damit genügen zur Erzielung einer bestimmten Süße erfindungsgemäß kleinere Mengen an Süßstoff verglichen mit dem Stand der Technik.

Zahlreiche sensorische Untersuchungen und Erfahrungswerte haben ergeben, daß 300 mg/kg Acesulfam-K (ASK) dieselbe Süße vermitteln wie eine 4,9 %ige wässrige Lösung an Saccharose. 300 mg/kg Aspartam (APM) vermitteln einer wässrigen Lösung die gleiche Süße wie 4,6 % Saccharose. Es ist bereits bekannt, daß eine sehr deutliche Süßkraftverstärkung auftritt, wenn ASK und APM zu gleichen Teilen kombiniert werden (siehe DE-C 2 628 294). So ist z.B. die Kombination von 90 mg/kg ASK mit 90 mg/kg APM ebenso süß, wie 300 mg/kg ASK alleine bzw. wie eine 4,9 %ige Saccharoselösung, obwohl man annehmen würde, daß z.B. 150 mg/kg ASK und 150 mg/kg APM ebenso süß sein sollten wie 300 mg/kg Einzelsüßstoff. Die Süßkraftverstärkung, welche durch eine derartige Kombination mit ASK und APM zu gleichen Teilen entsteht, beträgt damit 40 %. Bei der Ermittlung der Süßkraftverstärkung einer Kombination von ASK/APM durch Oligosaccharide wurde dieser bereits bekannten Süßkraftverstärkung Rechnung getragen, indem diese bereits bei den Versuchen miteinbezogen wurde:
Da nämlich wie oben ausgeführt bekannt ist, daß 90 mg/kg ASK und 90 mg/kg APM die gleiche Süße haben wie eine 4,9 %ige Saccharose-Lösung, wurde die ermittelte Süßkraft des jeweiligen Oligosaccharides einfach rechnerisch hinzugefügt. Das Ergebnis dieser Rechnung ist die theoretische Süßkraft, die die jeweilige Acesulfam-K/Aspartam/Oligosaccharid-Mischung haben müßte. Um die tastächliche Süßkraft festzustellen, wurden die jeweiligen Acesulfam-K/Aspartam/Oligosaccharid-Mischungen gegen entsprechende geeignete Saccharose-Lösungen verkostet und statistisch ausgewertet. Es zeigte sich dabei überraschend, daß die durch die sensorische Untersuchungen ermittelten tatsächlichen Süßkräfte deutlich höher sind als die rechnerisch ermittelten, theoretischen Süßkräfte.

So hat Lactosucrose in einer 10 %igen wässrigen Lösung die gleiche Süßkraft wie eine 3,7 %ige wässrige Lösung von Saccharose. Wenn man die Süßkraft der Saccharose mit 1 gleichsetzt, dann ist eine 10 %ige wässrige Lösung von Lactosucrose 0,37 mal so süß wie Saccharose. Inulin hat in einer 10 %igen Lösung die gleiche Süßkraft wie eine 1 %ige wässrige Lösung von Saccharose. Wenn man also die Süßkraft der Saccharose mit 1 gleichsetzt, dann ist eine 10 %ige wässrige Lösung von Inulin 0,1 mal so süß wie Saccharose. Die Mischung 90 mg/kg Acesulfam-K und 90 mg/kg Aspartam ist ebenso süß wie eine 4,9 %ige Saccharose-Lösung bzw. die Acesulfam-K/Aspartam-Mischung ist 0,49 mal so süß wie Saccharose. Addiert man beide Süßkräfte, also 0,37 von Lactosucrose + 0,49 von Acesulfam-K /Aspartam, so erhält man eine theoretische Süßkraft von 0,86 der Süßkraft von Saccharose bzw. eine Süßkraft, die einer 8,6 %igen Saccharose-Lösung entspricht. Tatsächlich ermittelt wurde jedoch eine Süßkraft, welche einer 10,4 %igen Saccharose-Lösung entspricht, bzw. 1,04 mal so süß ist wie Saccharose. Setzt man die rechnerisch ermittelte Süßkraft von 0,86 gleich 100 %, so ergibt sich für die tatsächliche Süßkraft eine Süßkraftverstärkung von 20,9 %. Im Falle von Inulin erhält man eine theoretische Süßkraft von 0,1 + 0,49 = 0,59 mal der Süßkraft von Saccharose bzw. eine Süßkraft, die einer 5,9 %igen Saccharoselösung entspricht. Tatsächlich ermittelt wurde jedoch eine Süßkraft, welche einer 8,2 %igen Saccharoselösung entspricht, bzw. 0,82 mal so süß ist wie Saccharose. Es ergibt sich also eine Süßkraftverstärkung von 39%.
Hierbei ist nochmals zu betonen, daß die bekannte Süßkraftverstärkung, welche allein durch die Kombination von ASK und APM erhalten wird, hier keinen Einfluß auf die Süßkraftverstärkung hat, da der dabei auftretenden, bekannten Süßkraftverstärkung durch die entsprechende Reduzierung der Einzelsüßstoff-Mengen Rechnung getragen wurde.

Betrachtet man die Kombination Acesulfam-K/Lactosucrose alleine, ohne den weiteren Süßstoff Aspartam, wird die nicht vorhersehbare erfindungsgemäße Süßkraftverstärkung besonderst deutlich.
Die Süße von 300 mg/kg Acesulfam-K entspricht der Süße einer 4,9 %igen Saccharose-Lösung bzw. ist 0,49 mal so süß wie Saccharose. Kombiniert man Acesulfam-K mit einer 10 %igen Lactosucrose-Lösung, welche 0,37 mal so süß ist wie Saccharose, dann ist die rechnerisch ermittelte Süße 0,86 mal so süß wie Saccharose. Tastächlich wurde jedoch durch sensorische Verkostungen eine Süße ermittelt, weiche 0,90 mal so süß ist wie Saccharose. Verglichen mit der rechnerisch ermittelten Süßeintensität von 0,86 entsteht eine Süßkraftverstärkung von nur 4,7 %.
Auch die Kombination von Aspartam und Lactosucrose alleine ergibt ein gleiches Bild. 300 mg/kg APM sind 0,46 mal so süß wie Saccharose. Kombiniert man dies mit einer 10 %igen Lactosucrose-Lösung, welche 0,37 mal so süß ist wie Saccharose, dann ist die rechnerische ermittelte theoretische Süßkraft 0,83 mal so süß wie Saccharose. Tastächlich wurde durch sensorische Verkostungen festgestellt, daß die tastächliche Süßkraft dieser Mischung 0,95 mal so süß ist wie Saccharose. Damit ergibt sich eine Verstärkung der Süßkraft von 14,5 %.
Beide Süßkraftverstärkungen der Einzelsüßstoffe mit Lactosucrose sind deutlich geringer als die Süßkraftverstärkung, welche durch die Kombination von Acesulfam-K und Aspartam mit Lactosucrose erreicht wird.

Im Falle von Inulin ergibt sich folgendes Bild:
Acesulfam-K/Inulin hat eine theoretische Süßkraft von 0,49 + 0,1 = 0,59, aber eine tatsächlich ermittelte Süßkraft von 0,64. Die Süßkraftverstärkung beträgt also nur 8,5 %.
Aspartam/Inulin hat eine theoretische Süßkraft von 0,46 + 0,1 = 0,56, aber eine tatsächlich ermittelte Süßkraft von 0,65. Die Süßkraftverstärkung beträgt also nur 16,1 %.
Auch hier sind beide Süßkraftverstärkungen der Einzelsüßstoffe mit Inulin deutlich geringer als die Süßkraftverstärkung, welche durch die Kombination von Acesulfam-K und Aspartam mit Inulin erreicht wird.

Neben dieser unerwarteten synergistischen Wirkung zeigen die anspruchsgemäßen Oligosaccharide noch andere vorteilhafte Effekte.
Aufgrund ihrer chemischen Struktur, die durch die menschlichen Verdauungsenzyme nicht hydrolisiert werden kann, werden die meisten Oligosaccharide nicht im Dünndarm verdaut, sondern wirken als lösliche Ballaststoffe. Erst im Dickdarm werden sie durch die nützliche Mikroflora restlos fermentiert. Dies geschieht hauptsächlich durch die körpereigenen Bifidobakterien. Dieser Prozeß stimuliert das Wachstum der körpereigenen Bifidobakterien und hemmt das Wachstum der schädlichen Bakterien, wie z. B. Enterobacteriacease oder Strepptokokken. Eine solche Veränderung in der Zusammensetzung der Darmflora wird für den Menschen als nützlich angesehen. Oligosaccharide mit diesen Eigenschaften werden daher als "praebiotisch" bezeichnet, da sie die Entwicklung der körpereigenen, erwünschten Bakterien im Verdauungstrakt stimulieren Zusätzlich wird dadurch das Immunsystem sowie die Synthese von Vitaminen (z. B. B 1, B 12) aktiviert und die Aufnahme einiger Mineralstoffe verbessert. Die Aufnahme solcher Oligosaccharide in ausreichender Menge trägt damit allgemein als positiver Beitrag zum Wohlbefinden und für die Gesundheit des Menschen bei.
Die Folge dieser besonderen Verstoffwechslung ist, daß diese Oligosaccharide dem Körper nur sehr wenige Kalorien zuführen. Im Dickdarm können die Mikroorganismen die Produkte in freie Fettsäuren umwandeln, die teilweise resorbiert werden. Wegen dieses Stoffwechselvorganges liegt der Kalorienwert von Inulin mit nur 1 kcal/g und von Oligofructose mit nur 1,5 kcal/g deutlich unter dem von Fett, Fructose, Glucose, Zucker und Stärke.

Die Aufnahme solcher Oligosaccharide bewirkt außerdem typische Ballaststoff-Effekte, da sie die Durchgangsgeschwindigkeit des Darminhaltes und das Stuhlgewicht erhöhen, den pH-Wert im Darm senken, das Verhältnis von HDULDL-Cholesterin verbessern, die Triglycerin- und Fettwerte im Blut verringern und Verstopfungen vorbeugen.

Oligosaccharide mit den oben beschriebenen Eigenschaften haben keinen Einfluß auf den Glucosespiegel im Serum, regen die Insulinsekretion nicht an und wirken sich nicht auf den Glukagonspiegel aus. Damit sind sie für Diabetiker geeignet.

Da beim Metabolismus von beispielsweise Inulin, Isomaltooligosacchariden oder Lactosucrose durch die Mundflora keine Fructose oder Glucose freigesetzt wird, verursachen diese Substanzen kaum Karies und keinen Zahnbelag.

Da Fructo- und Galactooligosaccharide, ebenso wie lsomaltooligosaccharide und Lactosucrose dem Produkt in der zugesetzten Menge Körper verleihen, da sie lösliche Ballaststoffe sind, wird die Viskosität des Produktes gesteigert und damit das Mundgefühl deutlich und sehr angenehm verbessert, und zwar ohne störende Fasern im Produkt, wie sie von traditionell Ballaststoff-angereicherten Getränken bekannt sind ("Kleie-Effekt").

Glycosylsucrose hat aufgrund seiner besonderen Herstellungsweise den Vorteil, nicht kariogen zu sein, da die darin enthaltene Saccharose nicht von den Bakterien in der Mundhöhle fermentiert werden können. Es hat damit die gleichen positiven körpergebenden Eigenschaften in Getränken wie herkömmliche Saccharide, jedoch ohne die Gefahr der Kariesentstehung.

Ein weiterer Vorteil von anspruchsgemäßen Oligosacchariden wie Maltotetraose, Maltose oder Trehalose liegt in den verbesserten technologischen Eigenschaften, besonders im Hinblick auf andere Lebensmittel als Getränke. Hier hat sich gezeigt, daß beispielsweise Backwaren und Süßwaren hergestellt werden können, die hinsichtlich der technologischen Eigenschaften stark verbessert sind. Da jedoch diese Oligosaccharide deutlich weniger süß sind als handelsüblicher Zucker, ist die Aufsüßung mit Süßstoffen nötig. Die Süßstoffe wirken hier zudem als Geschmacksverstärker/-verbesserer, d.h., der Geschmack der Süße der Mischung aus Süßstoffen und diesen Oligosacchariden wird sehr viel zuckerähnlicher als es zu erwarten wäre.

Maltose, beispielsweise anstelle eines Teiles des Zuckers eingesetzt, verhindert in Backwaren die Retrogradation der Stärke, welche zum Altbackenwerden von Backwaren führt, sehr viel besser als herkömmliche Saccharide, hat aber ansonsten die Eigenschaften wie herkömmliche Saccharide (z.B. Saccharose, Fruktose, Glukose), wie z.B. die geringe Wasseraktivität.

Trehalose verhindert in Backwaren ebenfalls die Retrogradation der Stärke. Die Backwaren sind zudem, wenn Trehalose mit Süßstoffen gemischt als Zuckerersatz eingesetzt wird, angenehm, aromatisch und saftig. Gummibärchen, welche mit einem Teil Trehalose hergestellt wurden, schmecken sehr fruchtig und aromatisch. Werden Hartkaramellen aus Trehalose hergestellt, dann sind diese gegenüber der Luftfeuchtigkeit sehr stabil und neigen nicht zur Rekristallisation wie herkömmliche, aus Saccharose und Glukosesirup hergestellte Hartkaramellen.

Maltotetraose hat ebenfalls die hervorragende Eigenschaft eines Feuchthaltemittels, beispielsweise in Gummizuckerwaren, welche sehr lange weich und und frisch bleiben, verhindert aber die Rekristallisation der Saccharose/Glukosesirup hervorragend.

Glycosylsucrose verleiht beispielsweise auch Gummizuckerwaren eine sehr gute Konsistenz, verhindert ebenfalls die Rekristallisation von beispielsweise Saccharose, hält die Gummizuckerwaren angenehm weich und hat in Kombination mit Süßstoffen ein sehr gutes Süßeprofil. Diese Vorteile, besonders hinsichtlich des Geschmackes werden aufgrund der Tatsache verstärkt, daß Glycosylsucrose nicht kariogen ist, aber ansonsten wie die Saccharose wirkt. Der Brennwert ist in etwa gleich, aber im Gegensatz zu "zuckerfreien", mit Zuckeralkoholen gesüßten Gummizuckerwaren sind die aus Glycosylsucrose hergestellten Produkte nicht laxierend.

Auf dem internationalen Markt für Getränke und Milchprodukte gibt es zahlreiche Produkte, in denen ein oder mehrere Süßstoffe mit weiteren, teilweise süß schmeckenden körpergebenden Substanzen kombiniert werden. Solche Substanzen sind z. B. Saccharose, Fructose, high fructose corn syrup, Glucosesirup etc.. Auch bei diesen Kombinationen von Süßstoffen mit Zuckerstoffen tritt eine mehr oder weniger ausgeprägte Süßkraftverstärkung auf. Die Süßkraftverstärkung und evtl. das angenehmere Mundgefühl, welches durch den Einsatz von körpergebenden Zuckerstoffe und der damit erhöhten Viskosität erreicht wird, sind die entscheidenden Faktoren für die Kombination von Süßstoffen und Zuckerstoffen. Durch den Einsatz dieser Zuckerstoffe wird jedoch neben den genannten Effekten wie Süßkraftverstärkung und Verbesserung des Mundgefühles kein weiterer Vorteil erreicht. Die genannten Substanzen sind kariogen, lösen also, wenn nicht unmittelbar nach dem Genuß die Zähne gereinigt werden, Karies aus. Da diese Substanzen aus Kohlenhydraten bestehen, welche vom menschlichen Körper sofort mit ca. 4 kcal/g verwertet und resorbiert werden, wird der kalorische Brennwert/Energiegehalt des Produktes, in welchem diese Kombination eingesetzt wird, deutlich erhöht.

Zuckerstoffe sind mit Ausnahme von Fructose nicht für den Verzehr durch Diabetiker geeignet, da sie die Insulinausscheidung anregen und den Blutzuckerspiegel erhöhen. Damit sind auch Produkte, in denen solche Zuckerstoffe in der für die Süßkraftverstärkung benötigte Menge zugesetzt sind, nicht mehr für Diabetiker geeignet.

Durch die Kombination von Süßstoffen mit Zuckerstoffen werden also neben der Süßkraftverstärkung und Verbesserung des Mundgefühles keine gesundheitlichen Vorteile geschaffen, wie es bei der Kombination von Süßstoffen mit Oligosacchariden der Fall ist. Die Vorteile der Kombination von Süßstoffen mit Oligosacchariden im einzelnen nochmals zusammengefaßt sind: Ballaststoff-Anreicherung, Probifiduseeffekt (Coloncarzinom-Prophylaxe), Diabetiker-Eignung, niedriger kalorischer Wert, angenehmes Mundgefühl, nicht kariogen.

Praktische Versuche zeigten auch, daß der Einsatz der anspruchsgemäßen Oligosaccharide gemeinsam mit einer Mischung aus Acesulfam-K und Aspartam auch in Produkten, wie beispielsweise den hinsichtlich der sensorischen Prüfung sehr empfindlichen Sauermilchgetränken oder Fruchtsaftgetränken, keine sensorisch nachzuweisenden signifikanten Unterschiede gegenüber entsprechenden Produkten, welche mit Zucker gesüßt sind, aufzeigen. Dies ist von besonderem Vorteil, da Zucker als Standard des süßen Geschmackes betrachtet wird. Es besteht also die Möglichkeit, Produkte herzustellen, die den herkömmlichen Produkten, welche mit Zucker gesüßt sind, gleich sind.

Die erfindungsgemäße Verwendung von Oligosacchariden zur Verstärkung der Süßkraft und zur Geschmacksverbesserung kann somit bei der Herstellung von Lebensmitteln der verschiedensten Art erfolgen. Beispiele sind Backwaren, wie beispielsweise Rührkuchen, Süßwaren, wie beispielsweise Gummibärchen, Hartkaramellen und Schokolade, insbesondere aber auch Getränke, wie Limonaden, Fruchtsaftgetränke, Brausen und Fruchtsäfte und und flüssige und halbflüssige Milchprodukte, wie Joghurt, Trinkjoghurt, Sauer- oder Buttermilch, sowie Brotaufstriche und alle Arten von Speiseeis. Daneben lassen sich Oligosaccharide aber auch bei der Herstellung von Heim- und Nutztierfutter und von Medikamentenformulierungen erfindungsgemäß verwenden.

Die genannten Lebensmittel enthalten neben der Süßstoffmischung und Oligosacchariden die an sich bekannten Grund- und Hilfsstoffe, wie beispielsweise Geschmacks- und Aromastoffe, Feuchtigkeitsregulatoren, Konservierungsmittel usw, in den an sich bekannten und üblichen Mengen und Konzentrationen.

### Beispiele

Süßkraft eingesetzter Oligosaccharide und Süßstoffe:

| | Konzentration in wäßriger Lösung | Süßkraft in wässriger Lösung (Saccharose = 1) |
|---|---|---|
| Inulin (Pulver) | 10% | 0,10 |
| Oligofructose (Sirup) | 10% | 0,45 |
| Galactooligosaccharid (Sirup) | 10% | 0,32 |
| Lactosucrose (Pulver) | 10% | 0,37 |
| Isomaltooligosacchride (Sirup) | 10% | 0,26 |
| Glycosylsucrose (Sirup) | 10% | 0,29 |
| Maltotetraose (Sirup) | 10% | 0,17 |
| Maltose (Pulver) | 10% | 0,36 |
| Trehalose (Pulver) | 10% | 0,32 |
| Acesulfam-K (Pulver) | 0,03% | 0,49 |
| Aspartam (Pulver) | 0,03% | 0,46 |
| Acesulfam-K + Aspartam | jeweils 0,009% | 0,49 |
| Acesulfam-K (Pulver) ¹⁾ | 0,075% | 0,65 |
| Aspartam (Pulver) ¹⁾ | 0,05% | 0,66 |
| NHDC | 0,016% | 0,64 |
| NHDC+Acesulfam-K+Aspartam | 0,001%+0,009%+ 0,009% | 0,65 |
| NHDC = Neohesperidin DC | | |

1) Es ist bekannt, daß die Süßkraft von Süßungsmitteln mit zunehmender Süßeintensität abnimmt. Für jeden Süßstoff ist diese Süßeintensitätskurve oder auch Süßkraftkurve genannt individuell und unterschiedlich. Daher ist es bekannt, daß zum Erreichen einer Süßeintensität von 0,65 im Vergleich zu Saccharose z.B. 750mg/kg oder 0,075% Acesulfam-K benötigt werden, aber nur 500mg/kg bzw. 0,05% Aspartam zum Erreichen der ähnlichen Süßeintensität von 0,66 im Vergleich zu Saccharose.

### Beispiel 1

Es wurde eine Mischung aus 99,82 Gew. -% Lactosucrose in Pulverform und jeweils 0,09 Gew. -% Acesulfam-K und Aspartam hergestellt und daraus eine 10,018 Gew.-% ige wässrige Lösung bereitet. Die Süße dieser Lösung wurde in sensorischen Tests bestimmt.
Die theoretische Süßkraft im Vergleich zu Saccharose (Saccharose = 1) gemäß obiger Tabelle beträgt 0,86. Die tatsächlich ermittelte Süßkraft beträgt aber 1,04. Die Süßkraftverstärkung beträgt also 20,9 %.

Zum Vergleich wurde der obige Versuch wiederholt, wobei aber statt der Mischung aus Aspartam und Acesulfam-K 0,3 Gew. -% Acesulfam-K verwendet wurde. Die theoretische Süßkraft dieser Mischung beträgt 0,86, die tatsächlich ermittelte aber 0,90. Die Süßkraftverstärkung beträgt also nur 4,7%.
Eine zweite Wiederholung des Versuchs mit 0,3 Gew.- % Aspartam anstelle der Aspartam/Acesulfam-K-Mischung ergab eine tatsächliche Süße von 0,95 anstelle einer theoretischen Süßkraft von 0,83. Die Süßkraftverstärkung beträgt also nur 14,5 %.

Eine Wiederholung von Beispiel 1 mit weiteren Oligosacchariden in den gleichen Gewichtsverhältnissen ergab die nachstehenden Ergebnisse:

| | Oligosaccharid | theoretische Süßkraft | tatsächliche Süßkraft | Süßkraftverstärkung |
|---|---|---|---|---|
| **Beispiel 2** | Glycosylsucrose (Sirup) | 0,78 | 0,93 | 19,2% |
| Vergleich: | | | | |
| nur ASK | | 0,78 | 0,83 | 6,4% |
| nur APM | | 0,75 | 0,86 | 14,7% |
| **Beispiel 3** | Maltose (Pulver) | 0,85 | 1,14 | 34,1% |
| Vergleich: | | | | |
| nur ASK | | 0,85 | 0,98 | 15,3% |
| nur APM | | 0,82 | 1,0 | 22,0% |
| **Beispiel 4** | Trehalose (Pulver) | 0,81 | 1,1 | 35,8% |
| Vergleich: | | | | |
| nur ASK | | 0,81 | 0,96 | 18,5% |
| nur APM | | 0,78 | 0,94 | 20,5% |
| **Beispiel 5** | Inulin (Pulver) | 0,59 | 0,82 | 39,0% |
| Vergleich: | | | | |
| nur ASK | | 0,59 | 0,64 | 8,5% |
| nur APM | | 0,56 | 0,65 | 16,1% |
| **Beispiel 6** | Oligofructose (Sirup) | 0,94 | 1,28 | 36,2% |
| Vergleich: | | | | |
| nur ASK | | 0,94 | 0,96 | 2,1% |
| nur APM | | 0,91 | 0,71 | -22,0% |
| **Beispiel 7** | Galactooligosaccharid (Sirup) | 0,81 | 0,95 | 17,3% |
| Vergleich: | | | | |
| nur ASK | | 0,81 | 0,72 | -11,1% |
| nur APM | | 0,78 | 0,82 | 5,1% |
| **Beispiel 8** | Inulin (Pulver) | 0,75 | 1,01 | 34,7% |
| (10mg/kg NHDC+90mg/ kg ASK+90 mg/kg APM) | | | | |
| Vergleich: | | | | |
| nur NHDC | | 0,74 | 0,74 | 0,0% |
| (160mg/kg) | | | | |
| nur ASK (750mg/kg) | | 0,75 | 0,77 | 2,7% |
| nur APM (500mg/kg) | | 0,76 | 0,91 | 19,7% |
| **Beispiel 9** (10mg/kg NHDC+90mg/ kg ASK+90 mg / kg APM) | Oligofructose (Sirup) | 1,10 | 1,32 | 20.0% |
| Vergleich: | | | | |
| nur NHDC (160mg/kg) | | 1,09 | 0,99 | -10,0% |
| nur ASK (750mg/kg) | | 1,10 | 1,13 | 2,7% |
| nur APM (500mg/kg) | | 1,11 | 1,16 | 4,5% |
| Abkürzungen: ASK Acesulfam-K APM Aspartam NHDC Neohesperidin DC | | | | |

### Anmerkung zu den Vergleichsbeispielen 6, 7 und 9:

Die ermittelte Süßkraftverstärkung ist hier im Falle von APM bzw. ASK bzw. NHDC negativ. Das bedeutet, daß die durch sensorische Tests ermittelte Süßkraft der Einzelsüßstoff/ Oligosaccharid-Mischung geringer ist als die theoretische Süßkraft, welche rechnerisch ermittelt wurde. Es ist bekannt, daß sich süß schmeckende Stoffe auch gegenseitig hemmen können, so daß die durch die Mischung entstehende Süßkraft geringer ist als man annehmen sollte ("=Süßkraftverminderung"). Umso interessanter ist daher, daß mit der Süßstoffmischung/Oligosaccharid-Kombination die Süßkraftverstärkung sehr deutlich ist.

### Anwendungsbeispiel 1

Es wurde ein Orangenfruchtsaftgetränk folgender Zusammensetzung hergestellt:
10 Gew.-% Orangensaftkonzentrat
4,5 Gew.-% Lactosucrose
0,0060 Gew.-% Acesulfam-K
0,0060 Gew.-% Aspartam
ad 100 Gew.-% mit Wasser aufgefüllt.

Als Vergleichsbeispiet (Standard) wurde ein Orangenfruchtsaftgetränk folgender Zusammensetzung verwendet:
10 Gew.-% Orangensaftkonzentrat
6 Gew.-% Saccharose
ad 100 Gew.-% mit Wasser aufgefüllt.

Eine sensorische Prüfung hinsichtlich Abweichung vom Standard wurde mit den Fragen
Welche Probe ist süßer ?
Welche Probe schmeckt besser ?
Welche Probe ist zuckerähnlicher ?
durchgeführt. Es war keine statistisch signifikante Abweichung erkennbar.

### Anwendungsbeispiel 2

Es wurde ein Trinkjoghurt folgender Zusammensetzung hergestellt:
30 Gew.-% Molke
10 Gew.-% Multivitaminsaft
5 Gew.-% Trehalose
0,0065 Gew.-% Acesulfam K
0,0065 Gew.-% Aspartam
ad 100Gew.-% mit Natur-Joghurt (Fettgehalt: 1,5%) aufgefüllt.

Als Vergleichsbeispiel (Standard) wurde ein Trinkjoghurt folgender Zusammensetzung verwendet:
30 Gew.-% Molke
10 Gew.-% Multivitaminsaft
6,5 Gew.-% Saccharose
ad 100 Gew.-% mit Natur-Joghurt (Fettgehalt: 1,5%) aufgefüllt.

Eine sensorische Prüfung wie in Anwendungsbeispiel 1 angegeben ergab keine statistisch signifikanten Abweichungen.

### Anwendungsbeispiel 3

Es wurde ein Trinkjoghurt folgender Zusammensetzung hergestellt:
30 Gew.-% Molke
10 Gew.-% Multivitaminsaft
5 Gew.-% Trehalose
0,0050 Gew.-% Acesulfam K
0,0050 Gew.-% Aspartam
ad 100Gew.-% mit Natur-Joghurt (Fettgehalt: 1,5%) aufgefüllt.

Als Vergleichsbeispiel (Standard) wurde ein Trinkjoghurt folgender Zusammensetzung verwendet:
30 Gew.-% Molke
10 Gew.-% Multivitaminsaft
6,0 Gew.-% Saccharose
ad 100 Gew.-% mit Natur-Joghurt (Fettgehalt: 1,5%) aufgefüllt.

Eine sensorische Prüfung wie in Anwendungsbeispiel 1 angegeben ergab keine statistisch signifikanten Abweichungen.

### Anwendungsbeispiel 4

Es wurde ein Orangenfruchtsaftgetränk folgender Zusammensetzung hergestellt:
10 Gew.-% Orangensaftkonzentrat
5,0 Gew.-% Glycosylsucrose-Sirup
0,0065 Gew.-% Acesulfam-K
0,0065 Gew.-% Aspartam
ad 100 Gew.-% mit Wasser aufgefüllt.

Als Vergleichsbeispiel (Standard) wurde ein Orangenfruchtsaftgetränk folgender Zusammensetzung verwendet:
10 Gew.-% Orangensaftkonzentrat
6 Gew.-% Saccharose
ad 100 Gew.-% mit Wasser aufgefüllt.

Eine sensorische Prüfung wie in Anwendungsbeispiel 1 angegeben ergab keine statistisch signifikanten Abweichungen.

### Anwendungsbeispiel 5

Es wurde ein Orangenfruchtsaftgetränk folgender Zusammensetzung hergestellt:
10 Gew.-% Orangensaftkonzentrat
4,5 Gew.-% Maltose
0,0050 Gew.-% Acesulfam-K
0,0050 Gew.-% Aspartam
ad 100 Gew.-% mit Wasser aufgefüllt.

Als Vergleichsbeispiel (Standard) wurde ein Orangenfruchtsaftgetränk folgender Zusammensetzung verwendet:
10 Gew.-% Orangensaftkonzentrat
6 Gew.-% Saccharose
ad 100 Gew.-% mit Wasser aufgefüllt.

Eine sensorische Prüfung wie in Anwendungsbeispiel 1 angegeben ergab keine statistisch signifikanten Abweichungen.

### Anwendungsbeispiel 6

Es wurde ein Orangenfruchtsaftgetränk folgender Zusammensetzung hergestellt:
10 Gew.-% Orangensaftkonzentrat
5,0 Gew.-% Oligofructose-Sirup
0,0005 Gew.-% NHDC
0,0045 Gew.-% Acesulfam-K
0,0045 Gew.-% Aspartam
ad 100 Gew.-% mit Wasser aufgefüllt.

Als Vergleichsbeispiel (Standard) wurde ein Orangenfruchtsaftgetränk folgender Zusammensetzung verwendet:
10 Gew.-% Orangensaftkonzentrat
6,5 Gew.-% Saccharose
ad 100 Gew.-% mit Wasser aufgefüllt.

Eine sensorische Prüfung wie in Anwendungsbeispiel 1 angegeben ergab keine statistisch signifikanten Abweichungen.

## Patentansprüche

1. Verwendung von wasserlöslichen, durch menschliche Verdauungsenzyme nicht hydrolisierbaren Oligosacchariden, welche aus zwei bis sechzig Monosaccharidbausteinen bestehen, zur Verstärkung der Süßkraft und zur Geschmacksverbesserung einer Acesulfam-K/Aspartam-Mischung.

2. Verwendung gemäß Anspruch 1, **dadurch gekennzeichnet, dass** als Oligosaccharide Inuline, Oligofructosen, Galactooligosaccharide, Isomaltooligosaccharide oder Lactosucrose eingesetzt werden.

3. Verwendung gemäß Anspruch 1 und/oder 2, **dadurch gekennzeichnet, dass** Acesulfam-K und Aspartam im Mischungsverhältnis zwischen 95:5 und 5:95, insbesondere zwischen 70:30 und 30:70, bevorzugt von 50:50, vorliegen.

4. Verwendung gemäß einem oder mehreren der Ansprüche 1 bis 3, **dadurch gekennzeichnet, dass** das Oligosaccharid und die Acesulfam-K/Aspartam-Mischung im Verhältnis 10:1 bis 10000:1, insbesondere 500:1 bis 5000:1, eingesetzt werden.

5. Verwendung gemäß einem oder mehreren der Ansprüche 1 bis 4, **dadurch gekennzeichnet, dass** der Mischung weitere geschmacksmodifizierende Substanzen zugesetzt werden.

6. Verwendung gemäß Anspruch 5, **dadurch gekennzeichnet, dass** als geschmacksmodifizierende Substanzen Neohesperidin D, Thaumatin oder Rhamnose eingesetzt werden.

## Claims

1. The use of water-soluble oligosaccharides which cannot be hydrolyzed by human digestive enzymes and which consist of two to sixty monosaccharide components, to increase the sweetening power and enhance the taste of an acesulfame-K/aspartame mixture.

2. The use as claimed in claim 1, wherein the oligosaccharides used are inulins, oligofructoses, galactooligosaccharides, isbmaltooligosaccharides or lactosucrose.

3. The use as claimed in claim 1 and/or 2, wherein acesulfame-K and aspartame are present in a mixing ratio between 95:5 and 5:95, in particular between 70:30 and 30:70, preferably of 50:50.

4. The use as claimed in one or more of claims 1 to 3, wherein the oligosaccharide and the acesulfame-K/aspartame mixture are used in a ratio of 10:1 to 10,000:1, in particular 500:1 to 5000:1.

5. The use as claimed in one or more of claims 1 to 4, wherein further taste-modifying substances are added to the mixture.

6. The use as claimed in claim 5, wherein, as taste-modifying substances, use is made of neohesperidin D, thaumatin or rhamnose.

## Revendications

1. Utilisation d'oligosaccharides non hydrolysables par les enzymes digestives humaines, qui sont constitués de deux à soixante motifs mono-saccharidiques, pour accentuer le pouvoir édulcorant et pour améliorer le goût d'un mélange acésulfame K/aspartame.

2. Utilisation selon la revendication 1, **caractérisée en ce qu'**on utilise comme oligosaccharides des inulines, oligofructoses, galacto-oligosacharides, isomalto-oligosaccharides ou le lactosaccharose.

3. Utilisation selon la revendication 1 et/ou la revendication 2, **caractérisée en ce que** l'acésulfame K et l'aspartame se trouvent en des proportions comprises entre 95:5 et 5:95, en particulier entre 70:30 et 30:70, de préférence de 50:50.

4. Utilisation selon une ou plusieurs des revendications 1 à 3, **caractérisée en ce que** l'oligosaccharide et le mélange acésulfame K/aspartame sont utilisés en un rapport de 10:1 à 10 000 : 1, en particulier de 500:1 à 5 000 : 1.

5. Utilisation selon une ou plusieurs. des revendications 1 à 4, **caractérisée en ce qu'**on ajoute au mélange d'autres substances modificatrices de goût.

6. Utilisation selon la revendication 5, **caractérisée en ce qu'**on utilise comme substances modificatrices de goût la néohespéridine D, la thaumatine ou le rhamnose.
